# EUROPÄISCHE PATENTSCHRIFT

(11) **EP 1 732 780 B1**
(45) Veröffentlichungstag und Bekanntmachung des Hinweises auf die Patenterteilung: **26.04.2017**
(21) Anmeldenummer: 05706980.9
(22) Anmeldetag: 24.01.2005
(51) Int. Cl.: B60K 35/00

(54) **KOMUNIKATIONSSYSTEM UND INFORMATIONSSYSTEM FÜR EIN KRAFTFAHRZEUG**
COMMUNICATIONS SYSTEM AND INFORMATION SYSTEM FOR A MOTOR VEHICLE
SYSTÈME DE COMMUNICATION ET SYSTÈME D'INFORMATION POUR AUTOMOBILE

(30) Priorität: 31.03.2004 US 557950 P
(43) Veröffentlichungstag der Anmeldung: 20.12.2006
(73) Patentinhaber: Volkswagen Aktiengesellschaft, 38440 Wolfsburg (DE)
(72) Erfinder: BERGMANN, Carsten, 95128 San José, CA (US); ZHANG, Zhaoxia, Los Altos, CA 94923 (US); SPECKS, Will, 38440 Wolfsburg (DE); SCHAAF, Klaus, 38116 Braunschweig (DE)
(86) Internationale Anmeldenummer: PCT/EP2005/000654
(87) Internationale Veröffentlichungsnummer: WO 2005/105509

(56) Entgegenhaltungen:
- EP-A- 1 125 784
- EP-A- 1 168 784
- DE-A1- 10 205 641
- US-A1- 2002 138 178

## Beschreibung

Die Erfindung betrifft ein Kommunikationssystem oder Informationssystem für ein Kraftfahrzeug, wobei das Kommunikationssystem oder Informationssystem eine Schnittstelle zum Austausch von Daten zwischen dem Kommunikationssystem und einem mobilen Telefon oder zum Austausch von Daten zwischen dem Informationssystem und einem mobilen Datenspeicher oder einem mobilen Computer aufweist.

Aus der DE 203 10 288 U1 ist eine Freisprecheinrichtung für Mobiltelefone in einem Personenkraftwagen mit einem im Personenkraftwagen ortsfest anzuordnenden Aufnahmehalter bekannt, der einerseits elektrisch mit einer im Fahrzeug installierten, an einer betreffenden Fahrzeugschnittstelle angeschlossenen Elektronikeinheit zu verbinden ist und andererseits einen Steckverbinder zur elektrischen und mechanischen Verbindung mit an unterschiedliche Mobiltelefone angepassten Telefonhaltern aufweist, wobei ein Bluetooth-Adapter mit einem integrierten Steckverbinder zum elektrischen und mechanischen Ankuppeln an den Steckverbinder des Aufnahmehalters vorgesehen ist.

Aus der DE 198 35 433 A1 ist ein Kommunikationsendgerät oder Telefon, insbesondere für die Internettelephonie, mit einem berührungssensitiven Anzeigedisplay als Eingabe-/Ausgabeschnittstelle bekannt, wobei Mittel zur Darstellung einer HTML-ähnlichen Seite auf dem Anzeigedisplay vorgesehen sind, über die eine Bedienung der Funktionen des Endgerätes ermöglicht ist. Das Telefon umfasst eine frei konfigurierbare Bedienoberfläche. Hierzu weist das Telefon ein berührungssensitives Anzeigedisplay und einen Internet Browser zur Aufbereitung von so genannten HTML-Seiten auf. Das Anzeigedisplay dient als Eingabe- und Ausgabeschnittstelle für einen Benutzer Der Internet Browser oder www-Browser kann als Umsetzeinrichtung beziehungsweise Interpreter für HTML-Seiten bezeichnet werden. Auf der HTML-Seite sind neben Text auch Steuerzeichen darstellbar, die zu anderen Seiten führen beziehungsweise Funktionen auslösen können. Im Telefon kann die Funktion des Browsers auf einem schon vorhandenen oder einem zusätzlichen Prozessor ablaufen. Analog ist die HTML-Seite im Telefon speicherbar. Über die HTML-Seite kann die Bedienoberfläche des Telefons von jedem Anbieter von Telekommunikationsdiensten frei konfiguriert werden. Der Browser stellt diese spezifische Bedienoberfläche am Telefon dar. Die HTML-Seite kann durch Java-Applets oder entsprechende Techniken ergänzt werden. Die HTML-Seiten werden beispielsweise über das Internet Protokoll vom Anbieter in das Telefon beziehungsweise Endgerät geladen. Das Endgerät ist beispielsweise erst nach dem Einspielen der Benutzeroberfläche durch den Operator des Anbieters benutzbar.

Aus der US 5 619 684 ist die Darstellung von Nummerntasten und Funktionstasten für ein Telefon auf einem unterhalb eines Touchscreens angeordneten Display bekannt. Aus der DE 102 05 641 (A1) ist eine Multifunktions-Bedieneinrichtung bekannt, die auf dem Display die Bedienoberfläche mindestens eines Endgeräts derart darstellt, dass diese visuell der Bedienoberfläche eines realen Endgeräts nachempfunden ist. Aus der EP 1 125 784 (A) ist eine rekonfigurierbare Display-Architektur bekannt, die verschiedene Endgeräte kontrollieren kann. Aus der EP 1 168 784 (A) ist eine externe Bedieneinheit für ein Mobilfunktelefon bekannt, die getrennt vom Mobilfunktelefon ausgebildet ist und mit dem Mobilfunktelefon verbindbar ist. Es ist Aufgabe der Erfindung, die Bedienbarkeit eines Kommunikationssystems oder Informationssystems für ein Kraftfahrzeug mit einer Schnittstelle zum Austausch von Daten zwischen dem Kommunikationssystem und einem mobilen Telefon oder zum Austausch von Daten zwischen dem Informationssystem und einem mobilen Datenspeicher oder einem mobilen Computer zu verbessern.

Vorgenannte Aufgabe wird durch ein Kommunikationssystem für ein Kraftfahrzeug entsprechend des unabhängigen Anspruchs 1 gelöst. In einer Ausgestaltung der Erfindung ist auf dem Display ein oberer Teil des mobilen Telefons neben einem unteren Teil des mobilen Telefons darstellbar.

In einer weiteren beispielhaften Ausgestaltung der Erfindung ist (von der Steuerung) eine Information über das Abbild des mobilen Telefons oder des Teils des Abbildes des mobilen Telefons im XML-Format zur Darstellung auf dem Display verwendbar. Einzelheiten zur Darstellung von im XML-Format gespeicherten Abbildungen können der US 6 640 169 B2 (incorporated by reference), der US 2003/0120397 A1 (incorporated by reference), der US 2002/0138178 A1 (incorporated by reference) und der EP 1 245 430 A1 entnommen werden.

In einer weiteren Ausgestaltung der Erfindung ist eine Information über das Abbild des mobilen Telefons oder des Teils des Abbildes des mobilen Telefons von dem mobilen Telefon an das Kommunikationssystem übertragbar, wobei die die Information über das Abbild des mobilen Telefons oder des Teils des Abbildes des mobilen Telefons insbesondere über die Schnittstelle in das Kommunikationssystem einlesbar ist.

In einer weiteren beispielhaften Ausgestaltung der Erfindung umfasst das Kommunikationssystem weiterhin einen Informationsspeicher zum Speichern einer Information über das Abbild des mobilen Telefons oder des Teils des Abbildes des mobilen Telefons. In einer weiteren Ausgestaltung der Erfindung umfasst das Kommunikationssystem zudem ein Identifikationsmodul zur Identifizierung des Typs des mobilen Telefons und insbesondere ein Auswahlmodul zur Auswahl einer Information über das Abbild des mobilen Telefons oder des Teils des Abbildes des mobilen Telefons in Abhängigkeit des identifizierten Typs des mobilen Telefons.
In einer weiteren Ausgestaltung der Erfindung ist die Schnittstelle eine Schnittstelle für eine drahtlose Kommunikation, insbesondere eine Bluetooth Schnittstelle. Vorgenannte Aufgabe wird zudem durch ein Verfahren zum Betrieb eines Kommunikationssystems für ein Kraftfahrzeug entsprechend des unabhängigen Anspruchs 5 gelöst.

In einer weiteren beispielhaften Ausgestaltung der Erfindung wird - insbesondere vor der Darstellung des zumindest ein Bedienelement umfassenden Abbildes des mobilen Telefons oder des Teils des zumindest ein Bedienelement umfassenden Abbildes des mobilen Telefons auf dem Display - eine Information über das Abbild des mobilen Telefons oder des Teils des Abbildes des mobilen Telefons von dem mobilen Telefon an das Kommunikationssystem übertragen. Diese Übertragung erfolgt insbesondere drahtlos.

In einer weiteren beispielhaften Ausgestaltung der Erfindung wird der Typ des mobilen Telefons identifiziert und - in einer weiteren Ausgestaltung der Erfindung - eine Information über das Abbild des mobilen Telefons oder des Teils des Abbildes des mobilen Telefons aus einem Informationsspeicher in Abhängigkeit des identifizierten Typs des mobilen Telefons ausgewählt, wobei in dem Informationsspeicher Informationen über zumindest je ein Abbild zumindest zweier mobiler Telefone oder zumindest je ein Teil zumindest je eines Abbildes zumindest zweier mobiler Telefone speicherbar ist bzw. gespeichert sind.

Vorgenannte Aufgabe wird zudem beispielsweise durch ein Informationssystem für ein Kraftfahrzeug gelöst, wobei das Informationssystem eine Schnittstelle zum Austausch von Daten zwischen dem Informationssystem und einem mobilen Datenspeicher, insbesondere einem PDA, und/oder einem mobilen Computer, ein Display mit einer zugeordneten Steuerung zur Darstellung eines zumindest ein Bedienelement umfassenden Abbildes des mobilen Datenspeichers und/oder des mobilen Computers oder eines Teils eines zumindest ein Bedienelement umfassenden Abbildes des mobilen Datenspeichers und/oder des mobilen Computers und einen über dem Display angeordneten Touchscreen zur Bedienung des mobilen Datenspeichers und/oder des mobilen Computers durch Berühren des Touchscreens im Bereich des dargestellten Bedienelementes oder durch Drücken auf den Touchscreen im Bereich des dargestellten Bedienelementes umfasst. Auf diese Weise kann ein Bediener, der an die Bedienung des mobilen Datenspeichers und/oder des mobilen Computers gewöhnt ist, diese mittels des Touchscreens in gleicher Weise bedienen wie mittels der Bedienelemente des mobilen Datenspeichers und/oder des mobilen Computers. Der Bediener muss sich dabei nicht auf eine neue Mensch-Maschine-Schnittstelle einstellen, sondern kann den mobilen Datenspeicher und/oder den mobilen Computer auch über die mittels des Touchscreens bedienbaren Bedienelementes in einer ihm vertrauten Weise bedienen.

In einer beispielhaften Ausgestaltung der Erfindung ist auf dem Display ein oberer Teil des mobilen Datenspeichers und/oder des mobilen Computers neben einem unteren Teil des mobilen Datenspeichers und/oder des mobilen Computers darstellbar.

In einer weiteren beispielhaften Ausgestaltung der Erfindung ist (von der Steuerung) eine Information über das Abbild des mobilen Datenspeichers und/oder des mobilen Computers oder des Teils des Abbildes des mobilen Datenspeichers und/oder des mobilen Computers im XML-Format zur Darstellung auf dem Display verwendbar. Einzelheiten zur Darstellung von im XML-Format gespeicherten Abbildungen können der US 6 640 169 B2 (incorporated by reference), der US 2003/0120397 A1 (incorporated by reference), der US 2002/0138178 A1 (incorporated by reference) und der EP 1 245 430 A1 entnommen werden.

In einer weiteren beispielhaften Ausgestaltung der Erfindung ist eine Information über das Abbild des mobilen Datenspeichers und/oder des mobilen Computers oder des Teils des Abbildes des mobilen Datenspeichers und/oder des mobilen Computers von dem mobilen Datenspeicher und/oder dem mobilen Computer an das Informationssystem übertragbar, wobei die Information über das Abbild des mobilen Datenspeichers und/oder des mobilen Computers oder des Teils des Abbildes des mobilen Datenspeichers und/oder des mobilen Computers insbesondere über die Schnittstelle in das Informationssystem einlesbar ist.

In einer weiteren beispielhaften Ausgestaltung der Erfindung umfasst das Informationssystem weiterhin einen Informationsspeicher zum Speichern einer Information über das Abbild des mobilen Datenspeichers und/oder des mobilen Computers oder des Teils des Abbildes des mobilen Datenspeichers und/oder des mobilen Computers. In einer weiteren Ausgestaltung der Erfindung umfasst das Informationssystem zudem ein Identifikationsmodul zur Identifizierung des Typs des mobilen Datenspeichers und/oder des mobilen Computers und insbesondere ein Auswahlmodul zur Auswahl einer Information über das Abbild des mobilen Datenspeichers und/oder des mobilen Computers oder des Teils des Abbildes des mobilen Datenspeichers und/oder des mobilen Computers in Abhängigkeit des identifizierten Typs des mobilen Datenspeichers und/oder des mobilen Computers.
In einer weiteren Ausgestaltung der Erfindung ist die Schnittstelle eine Schnittstelle für eine drahtlose Kommunikation, insbesondere eine Bluetooth Schnittstelle.

Vorgenannte Aufgabe wird zudem beispielsweise durch ein Verfahren zum Betrieb eines Informationssystems für ein Kraftfahrzeug gelöst, wobei eine datentechnische Verbindung zwischen dem Informationssystem und einem mobilen Datenspeicher und/oder einem mobilen Computer, insbesondere über eine vorgenannte Schnittstelle, hergestellt und ein zumindest ein Bedienelement umfassendes Abbild des mobilen Datenspeichers und/oder des mobilen Computers oder ein Teil eines zumindest ein Bedienelement umfassenden Abbildes des mobilen Datenspeichers und/oder des mobilen Computers auf einem Display dargestellt wird. Der mobile Datenspeicher und/oder der mobile Computer kann dabei insbesondere durch Berühren eines über dem Display angeordneten Touchscreens im Bereich des dargestellten Bedienelementes oder durch Drücken auf den Touchscreen im Bereich des dargestellten Bedienelementes bedient werden.

In einer weiteren beispielhaften Ausgestaltung der Erfindung wird - insbesondere vor der Darstellung des zumindest ein Bedienelement umfassenden Abbildes des mobilen Datenspeichers und/oder des mobilen Computers oder des Teils des zumindest ein Bedienelement umfassenden Abbildes des mobilen Datenspeichers und/oder des mobilen Computers auf dem Display - eine Information über das Abbild des mobilen Datenspeichers und/oder des mobilen Computers oder des Teils des Abbildes des mobilen Datenspeichers und/oder des mobilen Computers von dem mobilen Datenspeicher und/oder dem mobilen Computer an das Informationssystem übertragen. Diese Übertragung erfolgt insbesondere drahtlos.

In einer weiteren beispielhaften Ausgestaltung der Erfindung wird der Typ des mobilen Datenspeichers und/oder des mobilen Computers identifiziert und - in einer weiteren Ausgestaltung der Erfindung - eine Information über das Abbild des mobilen Datenspeichers und/oder des mobilen Computers oder des Teils des Abbildes des mobilen Datenspeichers und/oder des mobilen Computers aus einem Informationsspeicher in Abhängigkeit des identifizierten Typs des mobilen Datenspeichers und/oder des mobilen Computers ausgewählt, wobei in dem Informationsspeicher Informationen über zumindest je ein Abbild zumindest zweier mobiler Telefone, mobiler Datenspeicher und/oder mobiler Computer oder zumindest je ein Teil zumindest je eines Abbildes zumindest zweier mobiler Telefone, mobiler Datenspeicher und/oder mobiler Computer speicherbar sind.

Vorgenannte Aufgabe wird zudem beispielsweise durch ein Kraftfahrzeug gelöst, wobei das Kraftfahrzeug eine Schnittstelle zum Austausch von Daten zwischen dem Informationssystem und einem mobilen Telefon, einem mobilen Datenspeicher, insbesondere einem PDA, und/oder einem mobilen Computer, ein Display mit einer zugeordneten Steuerung zur Darstellung eines zumindest ein Bedienelement umfassenden Abbildes des mobilen Telefons, des mobilen Datenspeichers und/oder des mobilen Computers oder eines Teils eines zumindest ein Bedienelement umfassenden Abbildes des mobilen Telefons, des mobilen Datenspeichers und/oder des mobilen Computers und einen über dem Display angeordneten Touchscreen zur Bedienung des mobilen Telefons, des mobilen Datenspeichers und/oder des mobilen Computers durch Berühren des Touchscreens im Bereich des dargestellten Bedienelementes oder durch Drücken auf den Touchscreen im Bereich des dargestellten Bedienelementes umfasst. Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen.
Fig. 1 zeigt eine Innenansicht eines Kraftfahrzeuges;
Fig. 2 zeigt ein Ausführungsbeispiel eines Kommunikationssystems;
Fig. 3 zeigt einen in einem Kommunikationssystem implementierten Verfahrensablauf;
Fig. 4 zeigt ein Ausführungsbeispiel eines mobilen Telefons;
Fig. 5 zeigt ein Ausführungsbeispiel einer Darstellung eines Abbildes des mobilen Telefons gemäß Fig. 4;
Fig. 6 zeigt ein Ausführungsbeispiel eines mobilen Telefons;
Fig. 7 zeigt ein Ausführungsbeispiel einer Darstellung eines Abbildes des mobilen Telefons gemäß Fig. 6;
Fig. 8 zeigt ein weiteres Ausführungsbeispiel eines Kommunikationssystems;
Fig. 9 zeigt einen in einem Kommunikationssystem implementierten Verfahrensablauf;
Fig. 10 zeigt ein Ausführungsbeispiel eines mobilen Datenspeichers und Computers;
Fig. 11 zeigt ein Ausführungsbeispiel einer Darstellung eines Abbildes des Datenspeichers und Computers gemäß Fig. 10; und
Fig. 12 zeigt ein Ausführungsbeispiel einer Darstellung eines Abbildes des mobilen Telefons gemäß Fig. 4 und eines Abbildes des Datenspeichers und Computers gemäß Fig. 10.

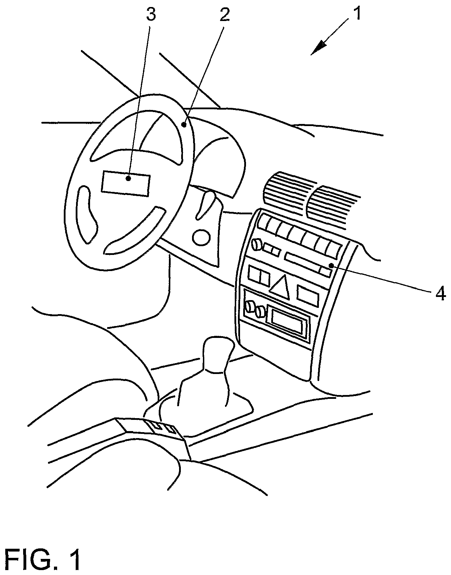

Fig. 1 zeigt eine Innenansicht eines Kraftfahrzeuges 1. Das Kraftfahrzeug 1 weist ein Lenkrad 2 auf, in das eine Anzeigevorrichtung 3 integriert ist. Die Anzeigevorrichtung 3 kann jedoch auch alternativ oder als zusätzliche Anzeigevorrichtung in einem Armaturenbrett 4 angeordnet sein.

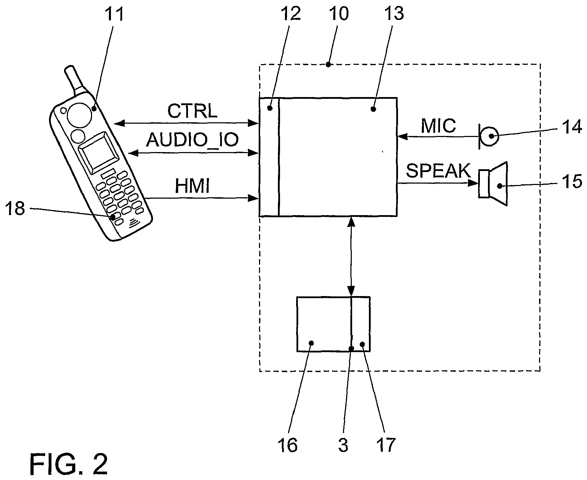

Das Kraftfahrzeug 1 umfasst zudem ein in Fig. 2 dargestelltes Kommunikationssystem 10 mit einer eine Bluetooth Schnittstelle 12 zum Austausch von Daten CTRL, AUDIO_IO, HMI zwischen dem Kommunikationssystem 10 und einem mobilen Telefon 11 aufweisenden Steuerung 13. Das Kommunikationssystem 10 umfasst zudem ein Mikrofon 14, dass ein Signal MIC erzeugt, und einen Lautsprecher 15 zur Ausgabe eines Lautsprechersignals SPEAK. Die Steuerung 13 bildet zusammen mit dem Mikrofon 14 und dem Lautsprecher 15 eine Freisprecheinrichtung für das mobile Telefon 11. Dabei werden das Signal MIC und Lautsprechersignal SPEAK als Audioeingangs- bzw. Audioausgangssignal AUDIO_IO zwischen der Steuerung 13 und dem mobilen Telefon 11 über die Bluetooth Schnittstelle 12 übertragen. Dieser Datenaustausch wird mittels eines Steuerungssignals CTRL gesteuert. Das Mikrofon 14 und der Lautsprecher 15 können auch Teil eines anderen Systems, wie z.B. einer Musikanlage, sein.

Das Kommunikationssystem 10 weist zudem die Anzeigevorrichtung 3 auf, die auch von anderen Komponenten wie einer Klimaanlage, einem Infotainmentsystem oder einen Navigationssystem genutzt werden kann. Eine solche Anzeigevorrichtung ist z.B. in der WO 00/21795 offenbart. Die Anzeigevorrichtung 3 umfasst ein Display 16 zur Darstellung eines zumindest ein Bedienelement 18 umfassenden Abbildes des mobilen Telefons 11 oder eines Teils eines zumindest das Bedienelement 18 umfassenden Abbildes des mobilen Telefons 11 sowie einen über dem Display 16 angeordneten Touchscreen 17 zur Bedienung des mobilen Telefons 11 durch Berühren des Touchscreens 17 im Bereich des dargestellten Bedienelementes und/oder durch Drücken auf den Touchscreen 17 im Bereich des dargestellten Bedienelementes. Dazu wird eine Information HMI über das Abbild des mobilen Telefons 11 oder des Teils des Abbildes des mobilen Telefons 11 von dem mobilen Telefon 11 im XML-Format über die Bluetooth Schnittstelle 12 an das Kommunikationssystem 10 bzw. die Steuerung 13 übertragen. Tabelle 1 zeigt ein Ausführungsbeispiel für eine derartige Information HMI im XML-Format. Einzelheiten zur Darstellung von Abbildungen im XML-Format können der US 6 640 169 B2 (incorporated by reference), der US 2003/0120397 A1 (incorporated by reference), der US 2002/0138178 A1 (incorporated by reference) und der EP 1 245 430 A1 entnommen werden.

| Tabelle 1 |
|---|
| <device name="Motorola 280i"> |
| <panel name="defaultScreen"> |
| <label name="batteryLevel"/> |
| <button name="phoneBook"/> |
| <button name="message"/> |
| </panel> |
| <panel name="phoneBook"> |
| ... |
| </device> |

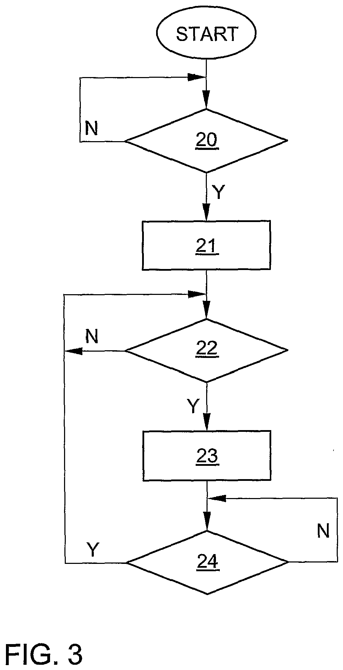

Fig. 3 zeigt einen in der Steuerung 13 und somit im Kommunikationssystem 10 implementierten Verfahrensablauf zur Darstellung des Abbildes des mobilen Telefons 11 bzw. eines Teils des Abbildes des mobilen Telefons 11. Dazu wird zunächst mittels einer Abfrage 20 abgefragt, ob ein mobiles Telefon datentechnisch mit der Steuerung 13 verbunden werden soll. Soll ein mobiles Telefon, z.B. das mobile Telefon 11, datentechnisch mit der Steuerung 13 verbunden werden, so folgt der Abfrage 20 ein Schritt 21, in dem eine Information HMI in Bezug auf das Abbild dieses mobilen Telefons 11 oder des Teils des Abbildes dieses mobilen Telefons 11 von diesem mobilen Telefon 11 im XML-Format über die Bluetooth Schnittstelle 12 an das Kommunikationssystem 10 bzw. die Steuerung 13 übertragen wird. Andernfalls folgt der Abfrage 20 erneut die Abfrage 20.

Wird die Anzeigevorrichtung 3 auch von anderen Funktionen wie einer Klimaanlage, einem Infotainmentsystem oder einen Navigationssystem genutzt, so folgt dem Schritt 21 eine Abfrage 22, ob das mobile Telefon 11 mittels der Anzeigevorrichtung 3 bzw. mittels des Touchscreens 17 bedient werden soll. Andernfalls folgt dem Schritt 21 ein Schritt 23, in dem ein Abbild des mobilen Telefons 11 oder des Teils des Abbildes des mobilen Telefons 11 auf dem Display 16 dargestellt wird. Soll das mobile Telefon 11 mittels der Anzeigevorrichtung 3 bzw. mittels des Touchscreens 17 bedient werden, so folgt der Abfrage 22 der Schritt 23. Andernfalls folgt der Abfrage 22 erneut die Abfrage 22.

Wird die Anzeigevorrichtung 3 auch von anderen Funktionen wie einer Klimaanlage, einem Infotainmentsystem oder einen Navigationssystem genutzt, so folgt dem Schritt 23 eine Abfrage 24, ob die Bedienung des mobilen Telefon 11 mittels der Anzeigevorrichtung 3 bzw. mittels des Touchscreens 17 beendet werden soll. Andernfalls folgt dem Schritt 23 die Abfrage 22. Soll die Bedienung des mobilen Telefon 11 mittels der Anzeigevorrichtung 3 bzw. mittels des Touchscreens 17 beendet werden, so folgt der Abfrage 24 die Abfrage 22. Andernfalls folgt der Abfrage 24 erneut die Abfrage 24.

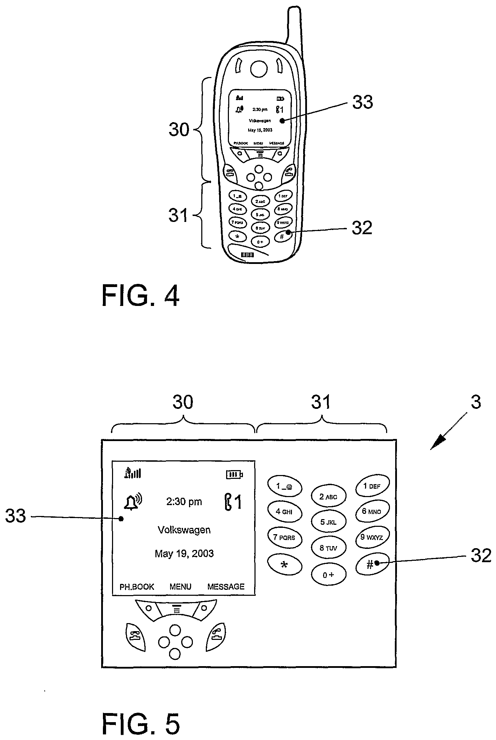

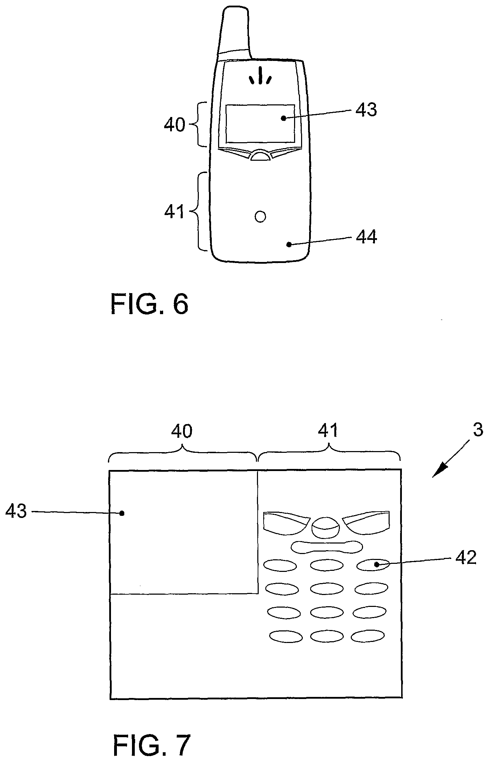

Fig. 4 und Fig. 6 zeigen je ein Ausführungsbeispiel eines mobilen Telefons, und Fig. 5 und Fig. 7 zeigen je ein Ausführungsbeispiel einer Darstellung eines Abbildes dieser mobilen Telefone gemäß Fig. 4 und Fig. 6. Dabei zeigt Fig. 4 ein Motorola 280i und Fig. 5 ein mittels der Anzeigevorrichtung 3 dargestelltes Abbild des Motorola 280i. Dabei wird ein oberer Teil 30 des Motorola 280i neben einem unteren Teil 31 des Motorola 280i dargestellt. Durch Berühren der Anzeigevorrichtung 3 bzw. des Touchscreens 17 im Bereich der dargestellten Bedienelemente 32 oder durch Drücken auf die Anzeigevorrichtung 3 bzw. auf den Touchscreen 17 im Bereich der dargestellten Bedienelemente 32 kann ein Bediener, der an die Bedienung des Motorola 280i gewöhnt ist, dieses mittels der Anzeigevorrichtung 3 bzw. des Touchscreens 17 in gleicher Weise bedienen wie das in Fig. 4 dargestellte Motorola 280i. Es kann vorgesehen werden, das mittels der Anzeigevorrichtung 3 auch ein Telefondisplay 33 abgebildet wird. Dabei kann vorgesehen sein, dass auf dem mittels der Anzeigevorrichtung 3 dargestellten Telefondisplay 33 Informationen in gleicher Weise dargestellt werden wie bei gleicher Bedienung auf dem eigentlichen Telefondisplay 33 des Motorola 280i.

Wird in dem Kraftfahrzeug 1 das Motorola 280i durch ein - in Fig. 6 dargestelltes - Ericsson T39m ausgetauscht, so wird - wie in Fig. 7 dargestellt - mittels der Anzeigevorrichtung 3 anstelle des Motorola 280i ein Abbild des Ericsson T39m dargestellt. Dabei wird ein oberer Teil 40 des Ericsson T39m neben einem unter einer Abdeckung 44 liegenden, unteren Teil 41 des Ericsson T39m dargestellt.

Durch Berühren der Anzeigevorrichtung 3 bzw. des Touchscreens 17 im Bereich der dargestellten, bei dem Ericsson T39m unterhalb der Abdeckung angeordneten Bedienelemente 42 oder durch Drücken auf die Anzeigevorrichtung 3 bzw. auf den Touchscreen 17 im Bereich der dargestellten, bei dem Ericsson T39m unterhalb der Abdeckung 44 angeordneten Bedienelemente 42 kann ein Bediener, der an die Bedienung des Ericsson T39m gewöhnt ist, dieses mittels der Anzeigevorrichtung 3 bzw. des Touchscreens 17 in gleicher Weise bedienen wie das in Fig. 6 dargestellte eigentliche Ericsson T39m. Es kann vorgesehen werden, das mittels der Anzeigevorrichtung 3 auch ein Telefondisplay 43 abgebildet wird. Dabei kann vorgesehen sein, dass auf dem mittels der Anzeigevorrichtung 3 dargestellten Telefondisplay 43 Informationen in gleicher Weise dargestellt werden wie bei gleicher Bedienung auf dem eigentlichen Telefondisplay 43 des Ericsson T39m.

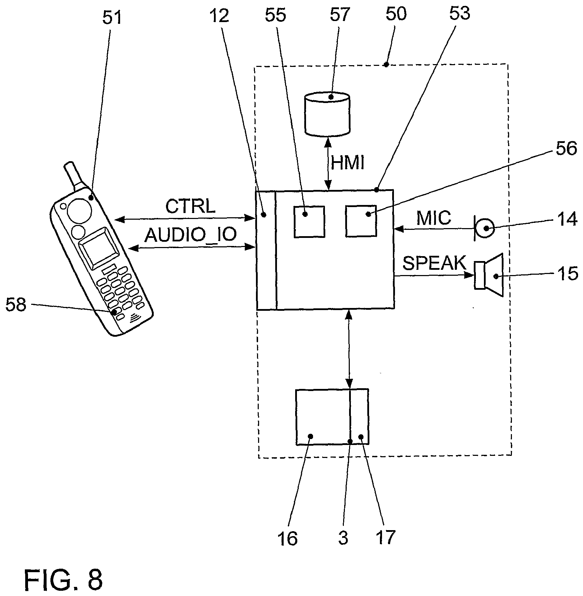

Fig. 8 zeigt ein zu dem in Fig. 2 dargestellten Kommunikationssystem 10 alternatives Kommunikationssystem 50, wobei gleiche Bezugzeichen wie in Fig. 2 gleiche oder gleichartige Gegenstände bezeichnen. Das Kommunikationssystem 50 gemäß Fig. 8 weist wie das Kommunikationssystem 10 gemäß Fig. 2 eine Bluetooth Schnittstelle 12 zum Austausch von Daten CTRL, AUDIO_IO zwischen dem eine Steuerung 53 aufweisenden Kommunikationssystem 50 und einem mobilen Telefon 51 auf. Das Kommunikationssystem 50 umfasst zudem ein Mikrofon 14, das ein Signal MIC erzeugt, und einen Lautsprecher 15 zur Ausgabe eines Lautsprechersignals SPEAK. Die Steuerung 53 bildet zusammen mit dem Mikrofon 14 und dem Lautsprecher 15 eine Freisprecheinrichtung für das mobile Telefon 51. Dabei werden das Signal MIC und Lautsprechersignal SPEAK als Audioeingangs- bzw. Audioausgangssignal AUDIO_IO zwischen der Steuerung 53 und dem mobilen Telefon 51 über die Bluetooth Schnittstelle 12 übertragen. Dieser Datenaustausch wird mittels eines Steuerungssignals CTRL gesteuert. Das Mikrofon 14 und der Lautsprecher 15 können auch Teil eines anderen Systems, wie z.B. einer Musikanlage, sein.

Das Kommunikationssystem 50 umfasst zudem die Anzeigevorrichtung 3, die auch von anderen Komponenten wie einer Klimaanlage, einem Infotainmentsystem oder einem Navigationssystem genutzt werden kann. Die Anzeigevorrichtung 3 umfasst ein Display 16 zur - wie z.B. in Fig. 4 und Fig. 6 gezeigten - Darstellung eines zumindest ein Bedienelement 58 umfassenden Abbildes des mobilen Telefons 51 oder eines Teils eines zumindest das Bedienelement 58 umfassenden Abbildes des mobilen Telefons 51 sowie einen über dem Display 16 angeordneten Touchscreen 17 zur Bedienung des mobilen Telefons 51 durch Berühren des Touchscreens 17 im Bereich des dargestellten Bedienelementes 58 und/oder durch Drücken auf den Touchscreen 17 im Bereich des dargestellten Bedienelementes 58. Das Kommunikationssystem 50 umfasst zudem einen Informationsspeicher 57 zum Speichern einer Information HMI über das Abbild des mobilen Telefons 51 oder des Teils des Abbildes des mobilen Telefons 51.

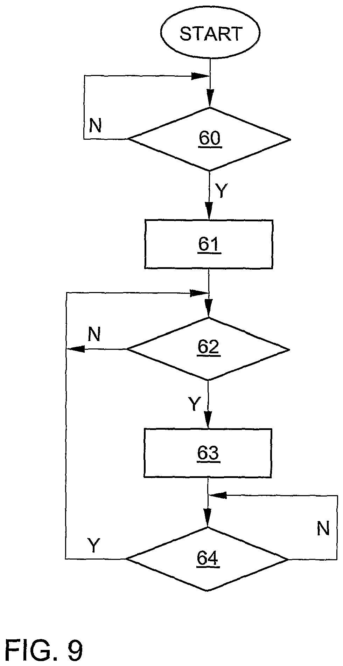

Zur Darstellung eines zumindest ein Bedienelement 58 umfassenden Abbildes des mobilen Telefons 51 oder eines Teils eines zumindest das Bedienelement 58 umfassenden Abbildes des mobilen Telefons 51 ist in der Steuerung 53 ein in Fig. 9 dargestellter Verfahrensablauf implementiert. Dazu wird zunächst mittels einer Abfrage 60 abgefragt, ob ein mobiles Telefon datentechnisch mit der Steuerung 53 verbunden werden soll. Soll ein mobiles Telefon, z.B. das mobile Telefon 51, datentechnisch mit der Steuerung 53 verbunden werden, so folgt der Abfrage 60 ein Schritt 61 zur Identifizierung des Typs, wie z.B. Motorola 280i oder Ericsson T39m, des mobilen Telefons 51 mittels eines in Fig. 8 dargestellten Identifikationsmoduls 55 und zur Auswahl einer Information HMI über das Abbild des mobilen Telefons 51 oder des Teils des Abbildes des mobilen Telefons 51 aus dem Informationsspeicher 57 im XML-Format in Abhängigkeit des identifizierten Typs des mobilen Telefons 51 mittels eines in Fig. 8 dargestellten Auswahlmoduls 56. Andernfalls folgt erneut die Abfrage 60.

Wird die Anzeigevorrichtung 3 auch von anderen Funktionen wie einer Klimaanlage, einem Infotainmentsystem oder einen Navigationssystem genutzt, so folgt dem Schritt 61 eine Abfrage 62, ob das mobile Telefon 51 mittels der Anzeigevorrichtung 3 bzw. mittels des Touchscreens 17 bedient werden soll. Andernfalls folgt dem Schritt 61 ein Schritt 63, in dem ein Abbild des mobilen Telefons 51 oder des Teils des Abbildes des mobilen Telefons 51 auf dem Display 16 dargestellt wird. Soll das mobile Telefon 51 mittels der Anzeigevorrichtung 3 bzw. mittels des Touchscreens 17 bedient werden, so folgt der Abfrage 62 der Schritt 63. Andernfalls folgt der Abfrage 62 erneut die Abfrage 62.

Wird die Anzeigevorrichtung 3 aus von anderen Funktionen wie einer Klimaanlage, einem Infotainmentsystem oder einen Navigationssystem genutzt, so folgt dem Schritt 63 eine Abfrage 64, ob die Bedienung des mobilen Telefon 51 mittels der Anzeigevorrichtung 3 bzw. mittels des Touchscreens 17 beendet werden soll. Andernfalls folgt dem Schritt 63 die Abfrage 62. Soll die Bedienung des mobilen Telefon 51 mittels der Anzeigevorrichtung 3 bzw. mittels des Touchscreens 17 beendet werden, so folgt der Abfrage 64 die Abfrage 62. Andernfalls folgt der Abfrage 64 erneut die Abfrage 64.
Es kann vorgesehen sein, dass das in Fig. 2 dargestellte Kommunikationssystem 10 und in Fig. 8 dargestellte Kommunikationssystem 50 auch oder alternativ zusammen mit einem mobilen Datenspeicher, insbesondere einem PDA, und/oder einem mobilen Computer genutzt werden können. In diesem Fall bezeichnen Bezugzeichen 10 und 50 ein Informationssystem im Sinne der Ansprüche. Ein derartiges Informationssystem 10 bzw. 50 weist - sofern es nicht auch in Verbindung mit einem mobilen Telefon nutzbar ist - üblicherweise weder das Mikrofon 14 noch den Lautsprecher 15 auf.

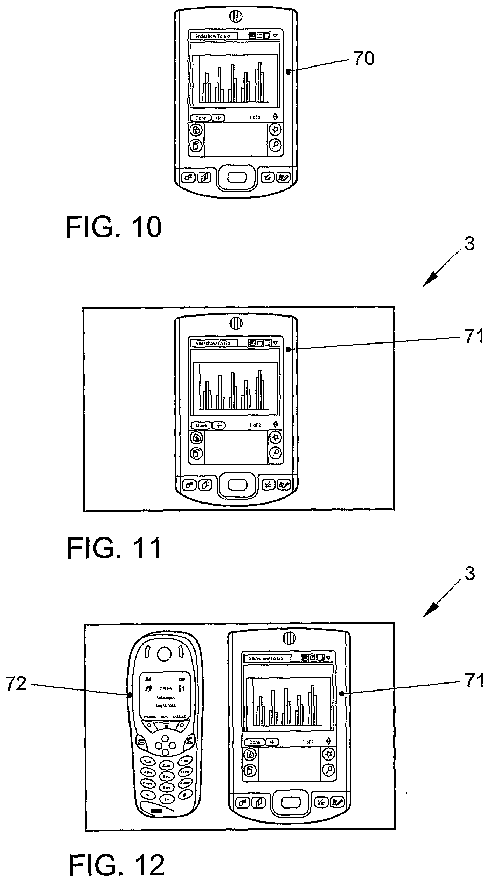

Fig. 10 zeigt einen mit Bezugszeichen 70 bezeichneten PALM Tungsten E als ein Ausführungsbeispiel eines mobilen Datenspeichers und Computers. Dessen Abbild 71 ist-wie in Fig. 11 gezeigt - in ähnlicher Weise wie in Bezug auf die mobilen Telefone Motorola 280i oder Ericsson T39m beschrieben zur Bedienung der PALM Tungsten E mittels der Anzeigevorrichtung 3 darstellbar. In alternativer beispielhafter Ausgestaltung ist auf dem Display ein oberer Teil des PALM Tungsten E neben einem unteren Teil des PALM Tungsten E darstellbar.
Es kann vorgesehen sein, dass das in Fig. 2 dargestellte Kommunikationssystem 10 und in Fig. 8 dargestellte Kommunikationssystem 50 zusammen mit einem mobilen Datenspeicher, insbesondere einem PDA, und/oder einem mobilen Computer genutzt werden können. In diesem Fall kann vorgesehen sein, dass ein mobiles Telefon und der mobile Datenspeicher bzw. mobile Computer - wie in Fig. 12 gezeigt - gleichzeitig mittels der Anzeigevorrichtung 3 dargestellt und bedient werden können. So zeigt Fig. 12 z.B. die gleichzeitige Darstellung eines Abbildes 72 eines Motorola 280i und eines Abbildes 71 eines PALM Tungsten E.
Die Steuerungen 13 und 53 können z.B. auf einer MGT5100 Hardwareplattform implementiert werden.

### Bezugszeichenliste

- 1: Kraftfahrzeug
- 2: Lenkrad
- 3: Anzeigevorrichtung
- 4: Armaturenbrett
- 10, 50: Kommunikationssystem
- 11, 51: mobiles Telefon
- 12: Schnittstelle
- 13, 53: Steuerung
- 14: Mikrofon
- 15: Lautsprecher
- 16: Display
- 17: Touchscreen
- 18, 32, 42, 58: Bedienelement
- 20, 22, 24, 60, 62, 64: Abfrage
- 21, 23, 61, 63: Schritt
- 30, 40: oberer Teil
- 31, 41: unterer Teil
- 33, 43: Telefondisplay
- 44: Abdeckung
- 55: Identifikationsmodul
- 56: Auswahlmodul
- 57: Informationsspeicher
- 70: PALM Tungsten E
- 71, 72: Abbild

- AUDIO_IO: Audioeingangs - bzw. Audioausgangssignal
- CTRL: Steuerungssignal
- HMI: Information
- MIC: Signal
- SPEAK: Lautsprechersignal

## Patentansprüche

1. Kommunikationssystem (10) für ein Kraftfahrzeug, wobei das Kommunikationssystem (10) eine von einer Klimaanlage, einem Infotainmentsystem oder einem Navigationssystem nutzbare Anzeigevorrichtung (3), ein Mikrofon (14), einen Lautsprecher (15) sowie eine drahtlose Schnittstelle (12) zum Austausch von Daten (CTRL, AUDIO_IO, HMI) zwischen dem Kommunikationssystem (10) und einem mobilen Telefon (11) umfasst, wobei die Daten (CTRL, AUDIO_IO, HMI) ein von dem Mikrofon (14) erzeugtes Signal (MIC) und ein von dem Lautsprecher (15) ausgebbares Lautsprechersignal (SPEAK) als Audioeingangs- und Audioausgangssignal (AUDIO_IO), ein Steuerungssignal (CTRL) zum Steuern des Austausches der Daten (CTRL, AUDIO_IO, HMI) sowie eine Information (HMI) über ein Abbild des mobilen Telefons (11) oder des Teils des Abbildes des mobilen Telefons (11) umfassen, wobei die Anzeigevorrichtung (3) ein Display (16) mit einer zugeordneten Steuerung (13) zur Darstellung eines zumindest ein Bedienelement umfassenden Abbildes des mobilen Telefons (11) oder eines Teils eines zumindest ein Bedienelement umfassenden Abbildes des mobilen Telefons (11) unter Verwendung der Information über das Abbild des mobilen Telefons oder des Teils des Abbildes des mobilen Telefons (11) und
einen über dem Display (16) angeordneten Touchscreen (17) zur Bedienung des mobilen Telefons (11) durch Berühren des Touchscreens (17) im Bereich des dargestellten Bedienelementes oder durch Drücken auf den Touchscreen (17) im Bereich des dargestellten Bedienelementes umfasst.

2. Kommunikationssystem (10) nach Anspruch 1, wobei auf dem Display (16) ein oberer Teil des mobilen Telefons (11) neben einem unteren Teil des mobilen Telefons (11) darstellbar ist.

3. Kommunikationssystem (10) nach Anspruch 1, wobei die Information über das Abbild des mobilen Telefons (11) oder des Teils des Abbildes des mobilen Telefons (11) über die drahtlose Schnittstelle (12) in das Kommunikationssystem (10) einlesbar ist.

4. Kommunikationssystem (10) nach Anspruch 1, wobei die drahtlose Schnittstelle (12) eine Bluetooth Schnittstelle ist.

5. Verfahren zum Betrieb eines Kommunikationssystems (10) für ein Kraftfahrzeug, , wobei das Kommunikationssystem (10) eine von einer Klimaanlage, einem Infotainmentsystem oder einem Navigationssystem nutzbare Anzeigevorrichtung (3), ein Mikrofon (14), einen Lautsprecher (15) sowie eine drahtlose Schnittstelle (12) zum Austausch von Daten (CTRL, AUDIO_IO, HMI) zwischen dem Kommunikationssystem (10) und einem mobilen Telefon (11) umfasst, wobei die Daten (CTRL, AUDIO_IO, HMI) ein von dem Mikrofon (14) erzeugtes Signal (MIC) und ein von dem Lautsprecher (15) ausgebbares Lautsprechersignal (SPEAK) als Audioeingangs- und Audioausgangssignal (AUDIO_IO), ein Steuerungssignal (CTRL) zum Steuern des Austausches der Daten (CTRL, AUDIO_IO, HMI) sowie eine Information (HMI) über ein Abbild des mobilen Telefons (11) oder des Teils des Abbildes des mobilen Telefons (11) umfassen, wobei die Anzeigevorrichtung (3) ein Display (16) mit einer zugeordneten Steuerung (12) zur Darstellung eines zumindest ein Bedienelement umfassenden Abbildes des mobilen Telefons (11) oder eines Teils eines zumindest ein Bedienelement umfassenden Abbildes des mobilen Telefons (11) und einen über dem Display (16) angeordneten Touchscreen (17) zur Bedienung des mobilen Telefons (11) durch Berühren des Touchscreens (17) im Bereich des dargestellten Bedienelementes oder durch Drücken auf den Touchscreen (17) im Bereich des dargestellten Bedienelementes umfasst; das Verfahren umfassend:
Herstellen einer datentechnischen Verbindung zwischen dem Kommunikationssystem (10) und einem mobilen Telefon (11);
Übertragung der Information über das Abbild des mobilen Telefons (11) oder des Teils des Abbildes des mobilen Telefons (11) von dem mobilen Telefon (11) an das Kommunikationssystem (10);
Darstellung eines zumindest ein Bedienelement umfassenden Abbildes des mobilen Telefons (11) oder eines Teils eines zumindest ein Bedienelement umfassenden Abbildes des mobilen Telefons (11) auf dem Display (16) unter Verwendung der Information über das Abbild des mobilen Telefons (11) oder des Teils des Abbildes des mobilen Telefons (11); und
Bedienung des mobilen Telefons (11) durch Berühren des Touchscreens (17) im Bereich des dargestellten Bedienelementes oder durch Drücken auf den Touchscreen im Bereich des dargestellten Bedienelementes.

## Claims

1. Communication system (10) for a motor vehicle, wherein the communication system (10) comprises a display device (3) useable by an air-conditioning system, an infotainment system or a navigation system, a microphone (14), a loudspeaker (15) and also a wireless interface (12) for exchanging data (CTRL, AUDIO_IO, HMI) between the communication system (10) and a mobile telephone (11), wherein the data (CTRL, AUDIO_IO, HMI) comprise a signal (MIC) generated by the microphone (14) and a loudspeaker signal (SPEAK), which can be output by the loudspeaker (15), as audio input and audio output signal (AUDIO_IO), a control signal (CTRL) for controlling the exchange of the data (CTRL, AUDIO_IO, HMI), and also information (HMI) about an image of the mobile telephone (11) or part of the image of the mobile telephone (11), wherein the display device (3) comprises a display (16) with an assigned controller (13) for representing an image - comprising at least one operating element - of the mobile telephone (11) or part of an image - comprising at least one operating element - of the mobile telephone (11) using the information about the image of the mobile telephone or the part of the image of the mobile telephone (11), and
a touchscreen (17) arranged above the display (16) and serving for operating the mobile telephone (11) by touching the touchscreen (17) in the region of the represented operating element or by pressing the touchscreen (17) in the region of the represented operating element.

2. Communication system (10) according to Claim 1, wherein an upper part of the mobile telephone (11) is representable alongside a lower part of the mobile telephone (11) on the display (16).

3. Communication system (10) according to Claim 1, wherein the information about the image of the mobile telephone (11) or the part of the image of the mobile telephone (11) is able to be read into the communication system (10) via the wireless interface (12).

4. Communication system (10) according to Claim 1, wherein the wireless interface (12) is a Bluetooth interface.

5. Method for operating a communication system (10) for a motor vehicle, wherein the communication system (10) comprises a display device (3) useable by an air-conditioning system, an infotainment system or a navigation system, a microphone (14), a loudspeaker (15) and also a wireless interface (12) for exchanging data (CTRL, AUDIO_IO, HMI) between the communication system (10) and a mobile telephone (11), wherein the data (CTRL, AUDIO_IO, HMI) comprise a signal (MIC) generated by the microphone (14) and a loudspeaker signal (SPEAK), which can be output by the loudspeaker (15), as audio input and audio output signal (AUDIO_IO), a control signal (CTRL) for controlling the exchange of the data (CTRL, AUDIO_IO, HMI), and also information (HMI) about an image of the mobile telephone (11) or part of the image of the mobile telephone (11), wherein the display device (3) comprises a display (16) with an assigned controller (12) for representing an image - comprising at least one operating element - of the mobile telephone (11) or part of an image - comprising at least one operating element - of the mobile telephone (11), and a touchscreen (17) arranged above the display (16) and serving for operating the mobile telephone (11) by touching the touchscreen (17) in the region of the represented operating element or by pressing the touchscreen (17) in the region of the represented operating element; the method comprising:
establishing a data-technological connection between the communication system (10) and a mobile telephone (11);
transmitting the information about the image of the mobile telephone (11) or the part of the image of the mobile telephone (11) from the mobile telephone (11) to the communication system (10);
representing an image - comprising at least one operating element - of the mobile telephone (11) or part of an image - comprising at least one operating element - of the mobile telephone (11) on the display (16) using the information about the image of the mobile telephone (11) or the part of the image of the mobile telephone (11); and
operating the mobile telephone (11) by touching the touchscreen (17) in the region of the represented operating element or by pressing the touchscreen in the region of the represented operating element.

## Revendications

1. Système de communication (10) pour un véhicule à moteur, dans lequel le système de communication (10) comprend un dispositif de visualisation (3), lequel peut être utilisé par un système de climatisation, par un système d'infotainment ou par un système de navigation, lequel système de communication comprend également un microphone (14), un haut-parleur (15), ainsi qu'une interface (12) sans fil en vue de l'échange de données (CTRL, AUDIO_IO, HMI) entre le système de communication (10) et un téléphone (11) mobile, où les données (CTRL, AUDIO_IO, HMI) comprennent un signal (MIC) produit par le microphone (14) et un signal du haut-parleur (SPEAK) pouvant être envoyé par le haut-parleur (15) sous la forme d'un signal d'entrée audio et d'un signal de sortie audio (AUDIO_IO), un signal de commande (CTRL) destiné à la commande des échanges de données (CTRL, AUDIO_IO, HMI), ainsi que des informations (HMI) relatives à une représentation du téléphone (11) mobile ou de la partie de la représentation du téléphone (11) mobile, où le dispositif de visualisation (3) comprend un écran de visualisation (16) avec une commande (13) associée en vue de la figuration d'une représentation du téléphone (11) mobile, laquelle comprend tout au moins un élément de commande, ou d'une partie d'une représentation du téléphone (11) mobile qui comprend tout au moins un élément de commande, en utilisant les informations relatives à la représentation du téléphone (11) mobile ou de la partie de la représentation du téléphone (11) mobile, et
un écran tactile (17) disposé au-dessus de l'écran de visualisation (16) en vue de la commande du téléphone (11) mobile en touchant l'écran tactile (17) dans la zone de l'élément de commande représenté ou par une pression sur l'écran tactile (17) dans la zone de l'élément de commande représenté.

2. Système de communication (10) selon la revendication 1, dans lequel une partie supérieure du téléphone (11) mobile peut être représentée sur l'écran de visualisation (16), à côté d'une partie inférieure du téléphone (11) mobile.

3. Système de communication (10) selon la revendication 1, dans lequel les informations relatives à la représentation du téléphone (11) mobile ou de la partie de la représentation du téléphone (11) mobile peuvent être lues sans fil dans le système de communication (10), par l'intermédiaire de l'interface (12).

4. Système de communication (10) selon la revendication 1, dans lequel l'interface (12) sans fil est une interface de type Bluetooth.

5. Procédé destiné au fonctionnement d'un système de communication (10) pour un véhicule à moteur, dans lequel le système de communication (10) comprend un dispositif de visualisation (3), lequel peut être utilisé par un système de climatisation, par un système d'infotainment ou par un système de navigation, lequel système de communication comprend également un microphone (14), un haut-parleur (15), ainsi qu'une interface (12) sans fil en vue de l'échange de données (CTRL, AUDIO_IO, HMI) entre le système de communication (10) et un téléphone (11) mobile, dans lequel les données (CTRL, AUDIO_IO, HMI) comprennent un signal (MIC) produit par le microphone (14) et un signal du haut-parleur (SPEAK) pouvant être envoyé par le haut-parleur (15) sous la forme d'un signal d'entrée audio et d'un signal de sortie audio (AUDIO_IO), un signal de commande (CTRL) destiné à la commande des échanges de données (CTRL, AUDIO_IO, HMI), ainsi que des informations (HMI) relatives à une représentation du téléphone (11) mobile ou de la partie de la représentation du téléphone (11) mobile, dans lequel le dispositif de visualisation (3) comprend un écran de visualisation (16) avec une commande (12) associée en vue de la figuration d'une représentation du téléphone (11) mobile, laquelle comprend tout au moins un élément de commande, ou d'une partie d'une représentation du téléphone (11) mobile qui comprend tout au moins un élément de commande, ainsi qu'un écran tactile (17) disposé au-dessus de l'écran de visualisation (16), en vue de la commande du téléphone (11) mobile en touchant l'écran tactile (17) dans la zone de l'élément de commande représenté ou par une pression sur l'écran tactile (17) dans la zone de l'élément de commande représenté ; ledit procédé comprenant les étapes suivantes :
- la réalisation d'une liaison informatique entre le système de communication (10) et un téléphone (11) mobile ;
- la transmission des informations relatives à la représentation du téléphone (11) mobile ou de la partie de la représentation du téléphone (11) mobile depuis le téléphone (11) mobile vers le système de communication (10) ;
- la figuration d'une représentation du téléphone (11) mobile comprenant tout au moins un élément de commande, ou d'une partie d'une représentation du téléphone (11) mobile comprenant tout au moins un élément de commande, sur l'écran de visualisation (16) en utilisant les informations relatives à la représentation du téléphone (11) mobile ou de la partie de la représentation du téléphone (11) mobile ; et
- la commande du téléphone (11) mobile en touchant l'écran tactile (17) dans la zone de l'élément de commande représenté ou par une pression sur l'écran tactile dans la zone de l'élément de commande représenté.
